# FASCICULE DE BREVET EUROPEEN

(11) **EP 2 804 782 B1**
(45) Date de publication et mention de la délivrance du brevet: **09.12.2015**
(21) Numéro de dépôt: 13701820.6
(22) Date de dépôt: 03.01.2013
(51) Int. Cl.: B60N 2/46, B60R 7/04

(54) **CONSOLE EXTRACTIBLE POUR HABITACLE D'UN VEHICULE AUTOMOBILE**
HERAUSNEHMBARE KONSOLE FÜR DEN INNENRAUM EINES KRAFTFAHRZEUGS
REMOVABLE CONSOLE FOR THE INNER SPACE OF A MOTOR VEHICLE

(30) Priorité: 19.01.2012 FR 1250528
(43) Date de publication de la demande: 26.11.2014
(73) Titulaire: Peugeot Citroën Automobiles SA, 78140 Vélizy Villacoublay (FR)
(72) Inventeur: BALLANDRAS, Philippe, F-25700 Valentigney (FR)
(86) Numéro de dépôt international: PCT/FR2013/050010
(87) Numéro de publication internationale: WO 2013/107961

(56) Documents cités:
- EP-A2- 0 397 333
- EP-A2- 1 316 473
- DE-A1- 10 013 177
- FR-A1- 2 725 671
- US-A- 5 338 081
- US-A1- 2006 022 478

## Description

La présente invention concerne une console extractible pour habitacle d'un véhicule, tel qu'un véhicule automobile.

Une telle console est habituellement disposée centralement entre deux sièges avant d'un véhicule automobile et peut comporter un ou plusieurs compartiments de rangement et servir d'accoudoir.

Le document FR 2 815 307 divulgue une console centrale pour un véhicule automobile et qui est pourvue d'une poignée pouvant être manoeuvrée pour désolidariser la console d'une glissière solidaire du plancher du véhicule.

Cependant, le mécanisme permettant de désolidariser la console de la glissière du plancher du véhicule sous l'action de la poignée de manoeuvre est d'une structure extrêmement complexe exigeant un très grand nombre d'organes. En outre, ce mécanisme est logé dans la console, réduisant ainsi considérablement le volume du ou des compartiments de rangement de la console.

Le document US 6 736 438 révèle également une console centrale pouvant être amoviblement fixée par des moyens de verrouillage sur un socle solidaire du plancher du véhicule entre deux sièges de celui-ci.

Ces moyens de verrouillage comprennent des pattes s'étendant de la face inférieure de la console et pouvant s'engager respectivement dans des fentes formées dans le socle.

Cependant, aucune précision n'est donnée dans ce document antérieur sur la manière selon laquelle la console peut être déverrouillée du socle de support et, en tout cas, de tels moyens de verrouillage ne sont pas adaptés pour assurer une bonne tenue de la console lors d'un choc frontal appliqué au véhicule.

Le document US5338081 décrit une console pour l'habitacle d'un véhicule, amoviblement fixée par l'intermédiaire de moyens de verrouillage a un socle 12 destiné à être solidarisé au plancher du véhicule. Des moyens de verrouillage comprennent, solidaires d'une semelle de la console, un premier crochet de verrouillage situé à une extrémité de la semelle et apte à s'engager dans une cavité de réception complémentaire du socle et un levier à un second crochet de verrouillage monté pivotant sur la semelle à sort extrémité opposée pour permettre au levier d'occuper une position de verrouillage du second crochet dans une autre cavité de réception complémentaire du socle ou une position de libération du second crochet de l'autre cavité de réception, position dans laquelle la console peut être extraite du socle par pivotement et translation de la console relativement au socle pour désengager le second crochet de sa cavité de réception du socle. La console présente l'inconvénient de posséder des moyens de verrouillage en saillie sous sa semelle, ce qui n'est pas ergonomique pour la manipuler et la stocker.

La présente invention a pour but de remédier aux inconvénients ci-dessus de l'art antérieur.

A cet effet est défini le véhicule selon la revendication 1.

De préférence, le socle comporte un ou plusieurs compartiments de rangement accessibles lorsque la console est extraite du socle.

Avantageusement, le levier est monté pivotant autour d'un axe transversal à la direction longitudinale de la semelle et est rappelé à sa position de verrouillage du second crochet par au moins un organe élastique, tel qu'un ressort.

La semelle est rapportée à la console ou est réalisée en une seule pièce avec la console.

Avantageusement, le premier crochet de verrouillage est intégré à la semelle.

Avantageusement, la console comporte un ou plusieurs compartiments de rangement.

La console peut être disposée centralement entre deux sièges du véhicule et constitue également un accoudoir.

De préférence, la console, le socle et le levier sont réalisés en une matière plastique.

L'invention vise également un véhicule, tel qu'un véhicule automobile, qui est caractérisé en ce qu'il comprend dans son habitacle au moins une console telle que définie précédemment et qui est située centralement entre deux siège avant ou arrière du véhicule et le socle est solidaire du plancher du véhicule.

De préférence, le premier crochet de verrouillage est situé à l'arrière de la console tandis que le levier à poignée de manoeuvre et second crochet de verrouillage est situé à l'avant de la console avec la poignée de manoeuvre directement accessible de la face avant de la console.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue en perspective éclatée d'un ensemble à console et socle de support conforme à l'invention ;
- la figure 2 est une vue en coupe longitudinale de l'ensemble de la figure 1 en position assemblée ;
- les figures 3A à 3D sont des vues schématiques montrant les différentes opérations permettant le retrait de la console relativement au socle de support ; et
- la figure 4 est une vue schématique en coupe longitudinale du socle sans la console.

En se reportant aux figures, la référence 1 désigne une console de forme générale approximativement parallélépipédique pouvant être située dans l'habitacle d'un véhicule, notamment entre deux sièges avant ou arrière du véhicule en s'étendant suivant la direction longitudinale de ce véhicule, auquel cas la console est dite centrale. Une telle console peut en outre constituer un accoudoir.

La console 1 comporte dans sa partie supérieure plusieurs compartiments 2 de rangement d'articles divers et est amoviblement fixée par des moyens de verrouillage sur un socle de support 3 fixé par tout moyen approprié, tel que par exemple des vis de fixation, au plancher du véhicule.

Selon l'invention, les moyens de verrouillage de la console 1 au socle 3 comprennent tout d'abord un premier crochet de verrouillage 4 intégré à une semelle 5 solidaire de la face inférieure de la console 1.

De préférence, le premier crochet 4 est situé à la partie d'extrémité arrière de la semelle 5 de la console 1 en considérant cette dernière solidaire du socle 3 disposé entre deux sièges avant ou arrière du véhicule.

Le premier crochet de verrouillage 4 coopère avec une cavité de réception complémentaire 6 réalisée dans le socle 3 en débouchant extérieurement en regard d'une face supérieure 3a du socle 3 pour permettre le verrouillage de la partie d'extrémité arrière de la console 1 au socle 3. La face 3a du socle 3 est conformée en une rampe ascendante vers l'avant de ce socle.

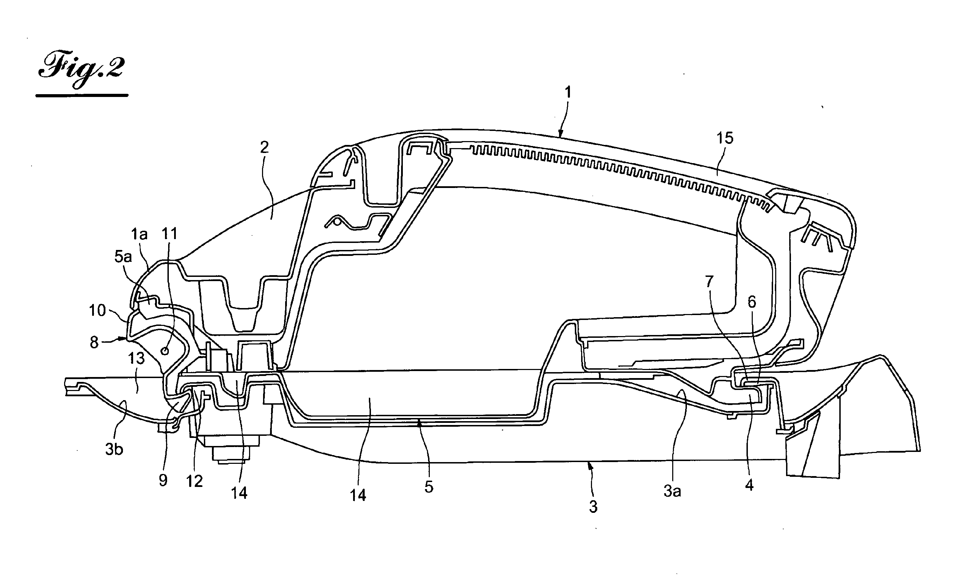

Le premier crochet de verrouillage 4 présente une partie d'extrémité en forme de doigt rectiligne de manière qu'une fois le premier crochet 4 introduit dans la cavité de verrouillage 6, la partie rectiligne soit sensiblement parallèle à une paroi 7 du socle 1 sous celle-ci et en s'étendant vers l'arrière de ce socle. Ainsi, le premier crochet 4, lorsqu'il occupe sa position de verrouillage dans sa cavité correspondante 6 du socle 3, ne peut être extrait du socle lorsqu'on exerce sur la console 1 un effort vertical dirigé vers le haut en considérant la figure 2.

Les moyens de verrouillage de la console 1 au socle 3 comprennent en outre un levier 8 dont l'un des bras comporte un second crochet de verrouillage 9 et l'autre bras comporte une poignée de manoeuvre 10. Le levier 8 est monté pivotant sur la semelle 5 en avant de cette dernière de manière que la poignée de manoeuvre 10 soit accessible extérieurement au niveau de la face avant 1a de la console 1.

Le levier 8 est monté pivotant sur la semelle 5 suivant un axe 11 s'étendant transversalement à la direction longitudinale de la console 1 et, par conséquent, transversalement à la direction longitudinale du véhicule lorsque la console 1 est solidarisée au socle 3.

Par exemple, l'axe de pivotement 11 pourrait être solidaire du levier 8 en ayant ses deux extrémités montées à rotation respectivement dans deux paliers de support de la semelle 5, non représentés.

Le second crochet 9 qui est recourbé vers le haut en considérant notamment la figure 2 fait saillie d'en-dessous la semelle 5 et peut s'engager dans une cavité de réception complémentaire 12 du socle 3 pour assurer le verrouillage de la partie avant de la console 1 à ce socle.

Le levier 8 peut pivoter entre une position à laquelle le second crochet 9 est en engagement de verrouillage dans la cavité 12 du socle 3 et une position de libération du second crochet 9 de la cavité 12. Le levier 8 est rappelé à sa position d'engagement du second crochet 9 dans la cavité de verrouillage 12 par au moins un organe élastique, tel qu'un ressort, non représenté. Dans le cas d'un ressort de rappel, celui-ci pourrait être interposé entre la semelle 5 et la poignée de manoeuvre 10 de manière à exercer sur le levier 8 un effort de pivotement dans le sens contraire des aiguilles d'une montre au regard de la figure 2. En variante, deux ressorts travaillant en torsion peuvent être montés sur les deux extrémités de l'axe de pivotement 11 en ayant chacun l'une de leurs extrémités solidaire de la semelle 5 et leur extrémité opposée solidaire de l'axe 11.

La poignée de manoeuvre 10 est conformée de manière qu'en position de verrouillage du second crochet 9 dans la cavité 12, elle soit en affleurement avec la face avant 1a de la console 1.

La partie supérieure avant de la semelle 5 comporte une cavité 5a dans laquelle peut s'enfoncer la poignée 10 lorsqu'elle est manoeuvrée dans le sens de libération du second crochet 9 de la cavité 12 du socle 3, c'est-à-dire dans le sens des aiguilles d'une montre au regard de la figure 2.

La cavité 12 débouche extérieurement en regard d'une face supérieure 3b de la partie avant du socle 3 et qui est conformée en forme de rampe ascendante vers l'avant de ce socle.

Comme représenté, la semelle 5 est rapportée à la console 1, mais elle peut être réalisée en une seule pièce avec cette console.

En outre, le levier 8 avec son crochet 9 et sa poignée de manoeuvre 10 sont réalisés en une seule pièce.

De préférence, la console 1 et sa semelle 5 pourvue du premier crochet 4, le socle 3 et le levier 8 sont réalisés par moulage d'une matière plastique.

Le socle 3 comporte avantageusement plusieurs compartiments de rangement 13 qui sont accessibles lorsque la console 1 est retirée de ce socle. Deux des compartiments 13 peuvent être constitués par les espaces situés au-dessus des faces supérieures en rampes 3a, 3b à proximité des cavités de verrouillage 6 et 12 du socle 3.

Le cas échéant, la semelle 5 peut comporter des parties en saillie 14 de forme complémentaire à certains des compartiments de rangement 13 du socle 3 de manière à s'engager dans ces compartiments lorsque la console 1 est verrouillée au socle 3.

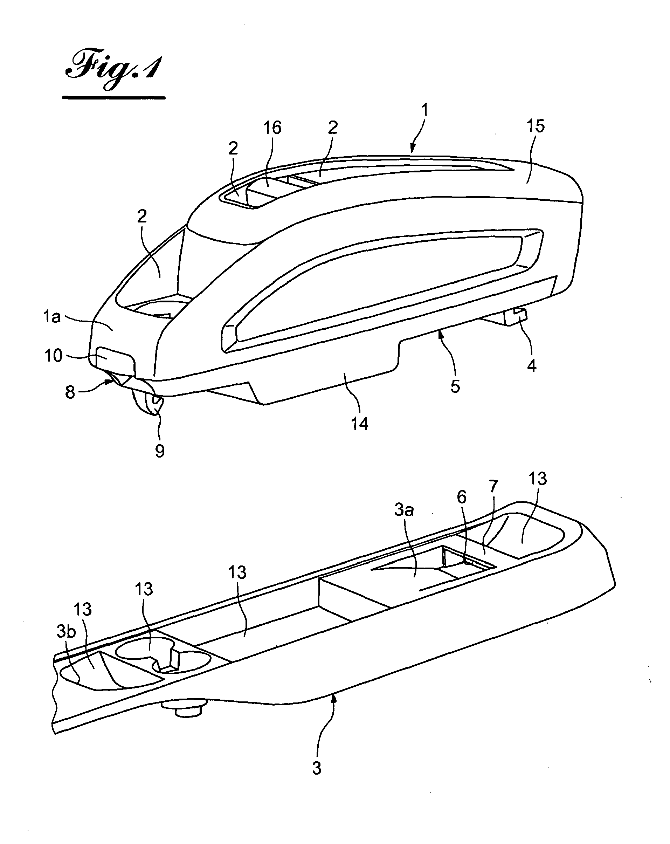

Comme cela ressort mieux de la figure 1, la console 1 peut comporter un couvercle 15 monté pivotant en partie arrière de la console et qui est verrouillé à sa partie avant par des moyens de verrouillage manuellement déverrouillables par une poignée de manoeuvre 16, ces différents moyens étant connus en soi et n'ont pas à être détaillés. Le couvercle 15 de fermeture de la console 1 peut comporter un ou plusieurs compartiments de rangement 2 et lorsqu'il est déverrouillé à sa position dressée d'ouverture, il permet d'accéder à un compartiment de logement interne de la console 1.

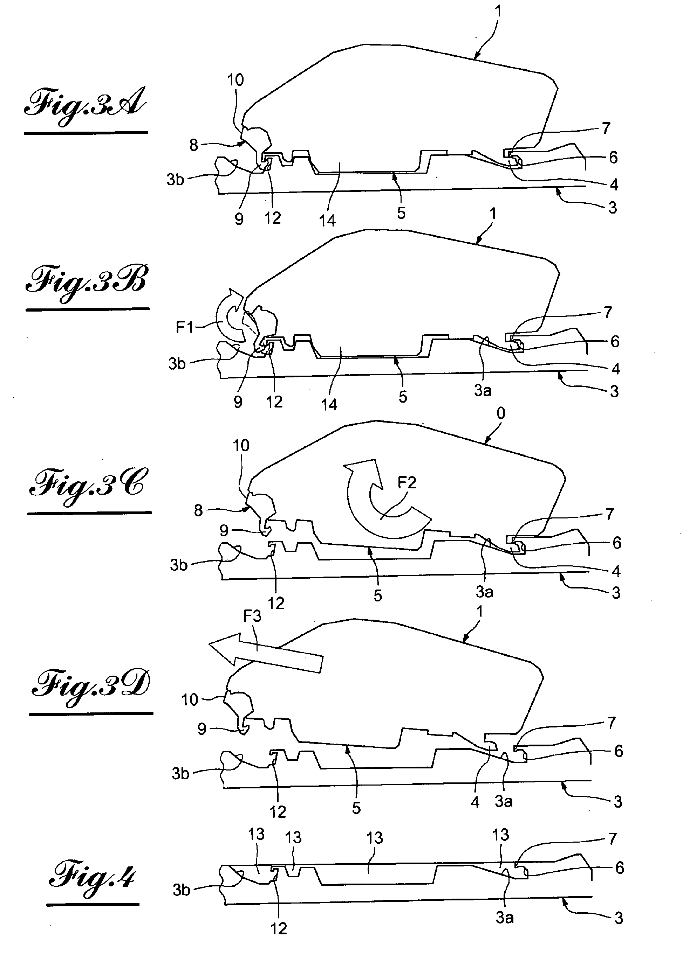

Le retrait de la console 1 du socle 3 va être maintenant décrit aux figures 3A à 3D.

A partir de la position de verrouillage de la console 1 au socle 3 représentée en figure 3A, un opérateur agit sur la poignée de manoeuvre 10 en l'enfonçant dans la cavité 5a de la semelle 5 de manière à faire pivoter le levier 8 dans le sens des aiguilles d'une montre comme indiqué par la flèche F1 en figure 3B pour provoquer le désengagement du second crochet 9 de sa cavité de verrouillage 12 du socle 3.

Ensuite, comme représenté en figure 3C, l'opérateur effectue sur la console 1 un mouvement de pivotement relativement au socle 3 autour du crochet arrière 4 dans la cavité 6 dans le sens des aiguilles d'une montre comme symbolisé par la flèche F2.

Puis, comme représenté en figure 3D, l'opérateur exerce sur la console 1 un effort de traction ou de translation symbolisé par la flèche F3 pour désengager le premier crochet 4 de sa cavité 6 avec glissement du premier crochet 4 sur au moins une portion de rampe de la face 3a située juste en sortie de la cavité 6. Dans ces conditions, la console 1 peut être complètement retirée du socle 3 comme représenté en figure 4 pour permettre l'accès aux compartiments de rangement 13 de celui-ci.

La remise en place de la console 1 sur le socle 3 s'effectue en sens inverse des opérations décrites aux figures 3A à 3D, c'est-à-dire que l'opérateur déplace en translation la partie arrière de la console 1 vers la partie arrière du socle 3 en engageant le premier crochet 4 sur la face en rampe 3a jusqu'à ce que le premier crochet 4 s'engage dans sa cavité de verrouillage 6. Ensuite l'opérateur fait pivoter la console 1 autour du premier crochet 4 dans sa cavité 6 dans le sens inverse à celui de la flèche F2 pour amener le second crochet 9 au-dessus de la cavité 12 et en appui sur le bord supérieur du socle 3 délimitant cette cavité de manière à repousser le levier 8 à l'encontre de la force de rappel de l'organe élastique qui agit ensuite sur ce levier pour engager élastiquement le second crochet 9 dans la cavité de verrouillage 12 du socle 3.

Ainsi, la remise en place de la console 1 sur le socle 3 s'effectue automatiquement et ne nécessite pas d'action sur le levier 8.

Les moyens permettant de verrouiller la console 1 sur le socle de support 3 sont d'une structure extrêmement simple et contribuent à réduire la masse de la console relativement aux consoles connues jusqu'à maintenant. En outre, ces moyens de verrouillage assurent une excellente tenue de la console sur le socle en cas de choc frontal appliqué au véhicule lorsque l'ensemble à console et socle est disposé centralement entre deux sièges avant du véhicule. Enfin, en l'absence de la console, le socle présente à l'utilisateur du véhicule des compartiments de rangement qui sont bien perçus du point de vue qualité.

## Revendications

1. Véhicule comportant une console, la dite console étant amoviblement fixée par l'intermédiaire de moyens de verrouillage à un socle (3) solidarisé au plancher du véhicule, les moyens de verrouillage comprenant, solidaires d'une semelle (5) de la console (1), un premier crochet de verrouillage (4) situé à une extrémité de la semelle (5) et apte à s'engager dans une cavité de réception complémentaire (6) du socle (3) et un levier (8) à second crochet de verrouillage (9) et poignée de manoeuvre (10) monté pivotant sur la semelle (5) à son extrémité opposée pour permettre au levier (8) d'occuper une position de verrouillage du second crochet (9) dans une autre cavité de réception complémentaire (12) du socle (3) ou une position de libération du second crochet (9) de l'autre cavité de réception (12) dans laquelle la console (1) peut être extraite du socle (3) par pivotement et translation de la console (1) relativement au socle (3) pour désengager le second crochet (9) de l'autre cavité de réception (12) du socle (3), la face supérieure du socle (3) étant conformée en une rampe ascendante en sortie de la cavité de réception (6), le premier crochet de verrouillage (4) présentant une partie d'extrémité en forme de doigt rectiligne, le second crochet de verrouillage (9) étant recourbé vers le haut.

2. Véhicule selon la revendication 1, **caractérisé en ce que** le socle (3) comporte un ou plusieurs compartiments de rangement (13) accessibles lorsque la console (1) est extraite du socle (3).

3. Véhicule selon la revendication 1 ou 2, **caractérisé en ce que** le levier (8) est monté pivotant autour d'un axe (11) transversal à la direction longitudinale de la semelle (5) et est rappelé à sa position de verrouillage du second crochet (9) par au moins un organe élastique, tel qu'un ressort.

4. Véhicule selon l'une des revendications précédentes, **caractérisé en ce que** la semelle (5) est rapportée à la console (1) ou est réalisée en une seule pièce avec la console (1).

5. Véhicule selon l'une des revendications précédentes, **caractérisé en ce que** le premier crochet de verrouillage (4) est intégré à la semelle (5).

6. Véhicule selon l'une des revendications précédentes, **caractérisé en ce que** la console comporte un ou plusieurs compartiments de rangement (2).

7. Véhicule selon l'une des revendications précédentes, **caractérisé en ce que** la console est disposée centralement entre deux sièges du véhicule et constitue également un accoudoir.

8. Véhicule selon l'une des revendications précédentes, **caractérisé en ce que** la console est réalisée en une matière plastique ainsi que le socle (3) et le levier (8).

9. Véhicule selon l'une des revendications précédentes, **caractérisé en ce qu'**il comprend dans son habitacle au moins une console (1) qui est située centralement entre deux sièges avant ou arrière du véhicule et **en ce que** le socle (3) est solidaire du plancher du véhicule.

10. Véhicule selon la revendication 9, **caractérisé en ce que** le premier crochet de verrouillage (4) est situé à l'arrière de la console (1) tandis que le levier (8) à poignée de manoeuvre (10) et second crochet de verrouillage (9) est situé à l'avant de la console (1) avec la poignée de manoeuvre (8) directement accessible de la face avant (1a) de la console (1).

## Patentansprüche

1. Fahrzeug mit einer Konsole, wobei die Konsole abnehmbar mit Hilfe von Verriegelungsmitteln an einem Sockel (3) befestigt ist, der mit dem Boden des Fahrzeugs fest verbunden ist, wobei die Verriegelungsmittel, fest verbunden mit einer Unterlage (5) der Konsole (1), einen ersten Verriegelungshaken (4) umfassen, der sich an einem Ende der Unterlage (5) befindet und ausgelegt ist, um in einen komplementären Aufnahmehohlraum (6) des Sockels (3) einzugreifen, und einen Hebel (8) mit einem zweiten Verriegelungshaken (9) und einen Handhabungsgriff (10), der drehend auf der Unterlage (5) an ihrem Ende montiert ist, wodurch dem Hebel (8) ermöglicht wird, eine Position der Verriegelung des zweiten Hakens (9) in einem komplementären Aufnahmehohlraum (12) des Sockels (3) oder eine Position der Freisetzung des zweiten Hakens (9) vom anderen Aufnahmehohlraum (12) einzunehmen, in der die Konsole (1) durch Drehen und Translations der Konsole (1) mit Bezug auf den Sockel (3) vom Sockel (3) herausgezogen werden kann, um den zweiten Haken (9) des anderen Aufnahmehohlraums (12) des Sockels (3) auszulösen, wobei die obere Seite (3a) des Sockels (3) an eine aufsteigende Rampe am Ausgang des Aufnahmehohlraums (6) angepasst ist,
wobei der erste Verriegelungshaken (4) einen Endteil in Form eines geradlinigen Fingers aufweist, wobei der zweite Verriegelungshaken (9) nach oben hin gekrümmt ist.

2. Fahrzeug nach Anspruch 1, **dadurch gekennzeichnet, dass** der Sockel (3) ein oder mehrere Ablagefächer (13) umfasst, die zugänglich sind, wenn die Konsole (1) vom Sockel (3) herausgezogen ist.

3. Fahrzeug nach Anspruch 1 oder 2, **dadurch gekennzeichnet, dass** der Hebel (8) drehbar um eine Achse (11) quer zur Längsrichtung der Unterlage (5) montiert ist und in seine Verriegelungsposition des zweiten Hakens (9) durch mindestens ein elastisches Element wie z.B. eine Feder zurückgestellt wird.

4. Fahrzeug nach einem der vorhergehenden Ansprüche, **dadurch gekennzeichnet, dass** die Unterlage (5) auf die Konsole (1) aufmontiert oder in einem einzigen Stück mit der Konsole (1) hergestellt ist.

5. Fahrzeug nach einem der vorhergehenden Ansprüche, **dadurch gekennzeichnet, dass** der erste Verriegelungshaken (4) in die Unterlage (5) integriert ist.

6. Fahrzeug nach einem der vorhergehenden Ansprüche, **dadurch gekennzeichnet, dass** die Konsole ein oder mehrere Ablagefächer (2) umfasst.

7. Fahrzeug nach einem der vorhergehenden Ansprüche, **dadurch gekennzeichnet, dass** die Konsole zentral zwischen zwei Sitzen des Fahrzeugs angeordnet ist und auch eine Armlehne darstellt.

8. Fahrzeug nach einem der vorhergehenden Ansprüche, **dadurch gekennzeichnet, dass** die Konsole aus einem Kunststoffmaterial hergestellt ist, ebenso wie der Sockel (3) und der Hebel (8).

9. Fahrzeug nach einem der vorhergehenden Ansprüche, **dadurch gekennzeichnet, dass** es in seinem Innenraum mindestens eine Konsole (1) umfasst, die sich zentral zwischen zwei Vorder- oder Hintersitzen des Fahrzeugs befindet, und dadurch, dass der Sockel (3) mit dem Boden des Fahrzeugs fest verbunden ist.

10. Fahrzeug nach Anspruch 9, **dadurch gekennzeichnet, dass** sich der erste Verriegelungshaken (4) an der hintere Seite der Konsole (1) befindet, während sich der Hebel (8) mit dem Handhabungsgriff (10) und dem zweiten Verriegelungshaken (9) vorne an der Konsole (1) befindet, wobei der Handhabungsgriff (8) direkt von der vorderen Seite (1a) der Konsole (1) zugänglich ist.

## Claims

1. Vehicle including a console, said console being fixed in a removable manner via locking means to a base (3) secured to the floor of the vehicle, the locking means comprising, secured to a base plate (5) of the console (1), a first locking hook (4) located at one end of the base plate (5) and which can be inserted into a complementary receiving recess (6) in the base (3) and a lever (8) including a second locking hook (9) and a manoeuvring handle (10), pivot-mounted to the base plate (5) at the opposite end thereof, so that the lever (8) can occupy a locking position in which the second hook (9) is locked in another complementary receiving recess (12) in the base (3) or a release position in which the second hook (9) is released from the other receiving recess (12), in which the console (1) can be removed from the base (3) by pivoting and translating the console (1) relative to the base (3) to release the second hook (9) from the other receiving recess (12) in the base (3), the upper surface (3a) of the base (3) being shaped into an ascending slope at the exit to the receiving recess (6), the first locking hook (4) having an end part in the shape of a rectilinear catch, the second locking hook (9) being curved upwards.

2. Vehicle according to claim 1, **characterised in that** the base (3) comprises one or multiple storage compartments (13) accessible when the console (1) is extracted from the base (3).

3. Vehicle according to claim 1 or 2, **characterised in that** the lever (8) is pivot-mounted around an axis (11) transverse to the longitudinal direction of the base plate (5) and is recalled to its position for locking the second hook (9), by at least one elastic member, for example a spring.

4. Vehicle according to one of the previous claims, **characterised in that** the base plate (5) is assembled on the console (1) or is made in one piece with the console (1).

5. Vehicle according to one of the previous claims, **characterised in that** the first locking hook (4) is integrated into the base plate (5).

6. Vehicle according to one of the previous claims, **characterised in that** the console comprises one or multiple storage compartments (2).

7. Vehicle according to one of the previous claims, **characterised in that** the console is positioned centrally between two vehicle seats and also constitutes an armrest.

8. Vehicle according to one of the previous claims, **characterised in that** the console, the base (3) and the lever (8) are made from a plastic material.

9. Vehicle according to one of the previous claims, **characterised in that** it comprises, in its passenger compartment, at least one console (1), which is located centrally between two front or rear seats of the vehicle and **in that** the base (3) is secured to the vehicle floor.

10. Vehicle according to claim 9, **characterised in that** the first locking hook (4) is located at the rear of the console (1), whereas the lever (8) with the manoeuvring handle (10) and the second locking hook (9) are located at the front of the console (1) with the manoeuvring handle (8) capable of being directly accessed from the front surface (1a) of the console (1).
